(19) Europäisches Patentamt
European Patent Office
Office européen des brevets

(11) **EP 3 898 367 B1**

(12) **EUROPÄISCHE PATENTSCHRIFT**

(45) Veröffentlichungstag und Bekanntmachung des Hinweises auf die Patenterteilung:
**19.06.2024  Patentblatt 2024/25**

(21) Anmeldenummer: **19813271.4**

(22) Anmeldetag: **27.11.2019**

(51) Internationale Patentklassifikation (IPC):
**B60W 40/10** *(2012.01)*     **B60W 40/12** *(2012.01)*
**B62D 15/02** *(2006.01)*

(52) Gemeinsame Patentklassifikation (CPC):
**B62D 15/0285; B60W 40/12; B62D 15/027;**
B60T 2240/07

(86) Internationale Anmeldenummer:
**PCT/EP2019/082692**

(87) Internationale Veröffentlichungsnummer:
**WO 2020/126362 (25.06.2020 Gazette 2020/26)**

(54) **VERFAHREN UND VORRICHTUNG ZUM ERMITTELN EINES DYNAMISCHEN REIFENUMFANGS EINES FORTBEWEGUNGSMITTELS**

METHOD AND DEVICE FOR DETERMINING A DYNAMIC TYRE CIRCUMFERENCE OF A MEANS OF TRANSPORT

PROCÉDÉ ET DISPOSITIF DE DÉTERMINATION D'UNE CIRCONFÉRENCE DYNAMIQUE DE PNEUMATIQUE D'UN MOYEN DE LOCOMOTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018  DE 102018222152**

(43) Veröffentlichungstag der Anmeldung:
**27.10.2021  Patentblatt 2021/43**

(73) Patentinhaber: **Robert Bosch GmbH**
**70442 Stuttgart (DE)**

(72) Erfinder:
• **MICHI, Harald**
**75248 Oelbronn-Duerrn (DE)**
• **STEIN, Fabian**
**71065 Sindelfingen (DE)**
• **KROUPA, Stepan**
**71116 Gärtringen (DE)**
• **LAZOUANE, Ussama**
**85055 Ingolstadt (DE)**

(56) Entgegenhaltungen:
**WO-A1-03/022651         DE-A1-102012 216 215**
**DE-A1-102016 103 637**

**Beschreibung**

Stand der Technik

Die vorliegende Erfindung betrifft ein Verfahren und eine Vorrichtung zum Ermitteln eines dynamischen Reifenumfangs eines Fortbewegungsmittels und insbesondere ein Ermitteln des dynamischen Reifenumfangs auf Basis eines Kalman-Filters.

Aus dem Stand der Technik sind Fortbewegungsmittel bekannt, die über Assistenzsysteme zur automatischen und/oder halbautomatischen Durchführung von Fahrmanövern verfügen. Solche Assistenzsysteme können beispielsweise Parkassistenzsysteme sein, die auf Basis von Umfeldsensoren und geeigneter Umfelderkennungsalgorithmen eingerichtet sind, ein Fortbewegungsmittel automatisch und/oder halbautomatisch in eine Parklücke zu manövrieren. Zur Berechnung einer geeigneten Einparktrajektorie für das Fortbewegungsmittel werden neben Informationen über eine Fahrzeuggeometrie u.a. Informationen über einen Reifenumfang jeweiliger Räder des Fortbewegungsmittels und eine Spurweite des Fortbewegungsmittels benötigt. Eine Verwendung vordefinierter Werte für einen jeweiligen Reifenumfang und eine jeweilige Spurweite eines Fortbewegungsmittels kann aufgrund dynamischer Einflüsse auf diese beiden Größen ggf. zu ungenau sein, um auf deren Basis Einparkvorgänge oder davon abweichende Manövriervorgänge mit einer gewünschten und/oder erforderlichen vordefinierten Genauigkeit durchführen zu können. Aus diesem Grund sind aus dem Stand der Technik Verfahren und Vorrichtungen bekannt, die einen jeweils aktuellen, dynamischen Reifenumfang ermitteln, auf dessen Basis nachfolgende Fahrmanöver mit entsprechend höherer Genauigkeit durchgeführt werden können.

Des Weiteren sind aus dem Stand der Technik sogenannte Kalman-Filter bekannt, die in der Lage sind, den Zustand eines Systems auf Basis von Messgrößen und insbesondere auf Basis verrauschter Messgrößen zu schätzen.

DE 10 2016 103 637 A1 beschreibt eine Einparkhilfe unter Berücksichtigung eines sich ändernden Reifenradius' und einer Spurweite. Dabei erfolgt eine Reifenradiusabschätzung unter Verwendung einer Mehrzahl von Parametern wie einer Radgeschwindigkeit, einer GPS-Geschwindigkeit, einem Lenkwinkel und einer Gierrate eines Fortbewegungsmittels.

DE 10 2013 021 826 A1 offenbart ein Verfahren zum Bestimmen eines Lenkwinkels eines Kraftfahrzeugs mittels einer Fahrassistenzeinrichtung, wobei neben einem Radumfang auch eine Spurweite Berücksichtigung findet.

DE 10 2012 208 298 A1 beschreibt ein Verfahren zum Ermitteln eines Reifenumfangs im Zusammenhang mit der Verwendung eines Gierwinkels und leitet daraus ein Verfahren zum Steuern eines Einparkvorgangs ab.

DE 10 2010 000 867 A1 betrifft ein Verfahren zur Ermittlung eines aktualisierten Radumfangs, wobei ein zunächst angenommener Radumfang mittels gemessener Beschleunigungsdaten rückwirkend korrigiert wird.

DE 10 2012 000 213 A1 offenbart ein Verfahren zur Ermittlung eines aktuellen Radumfangs von zumindest einem Rad eines Kraftfahrzeugs auf Basis zweier durch Satellitennavigation bestimmter Fahrzeugpositionen.

DE 10 2006 058 567 A1 beschreibt ein Verfahren zur Ermittlung eines aktualisierten Radumfangs, bei welchem verschiedene Datenquellen, darunter auch GPS-Daten eingesetzt werden.

DE 10 2010 007 650 A1 offenbart ein Verfahren zur Ermittlung eines aktuellen Radumfangs, wobei Entfernungswerte aus einer Abstandsmessung unter Verwendung von Abstandssensoren und eine Radimpulszahl zu Grunde gelegt werden.

DE 10 2012 216215 A1 und WO 03/022651 A1 offenbaren Sensorsysteme bzw. Verfahren zur Bestimmung einer Größe eines Rads eines Kraftfahrzeugs.

Offenbarung der Erfindung

Offenbarung der Erfindung

Gemäß einem ersten Aspekt der vorliegenden Erfindung wird ein Verfahren zum Ermitteln eines dynamischen Reifenumfangs eines Fortbewegungsmittels vorgeschlagen. Das Fortbewegungsmittel kann beispielsweise ein Straßenfahrzeug (z.B. Motorrad, PKW, Transporter, LKW, Shuttle-Bus) oder ein Schienenfahrzeug oder ein Luftfahrzeug/Flugzeug oder ein Wasserfahrzeug sein.

In einem ersten Schritt des erfindungsgemäßen Verfahrens wird ein erstes Signal repräsentierend eine Gierrate des Fortbewegungsmittels, ein zweites Signal repräsentierend eine Raddrehzahl eines Rades des Fortbewegungsmittels, ein drittes Signal repräsentierend einen Lenkwinkel des Fortbewegungsmittels und ein viertes Signal repräsentierend eine dynamische Spurweite des Fortbewegungsmittels von einer erfindungsgemäßen Vorrichtung im Fortbewegungsmittel empfangen. Der dynamische Reifenumfang und die dynamische Spurweite sind im Vergleich zu einem technischen Reifenumfang und zu einer technischen Spurweite vorteilhaft verwendbare Größen, da diese die tatsächlich vorliegenden Werte für den Reifenumfang und die Spurweite in einem Fahrbetrieb des Fortbewegungsmittels repräsentieren. Unter dem technischen Reifenumfang und unter der technischen Spurweite sollen hier vordefinierte Werte verstanden werden, welche beispielsweise im Stillstand des Fortbewegungsmittels gemessen und/oder aus einer technischen Spezifikation des Fortbewegungsmittels und/oder aktuell verwendeter Reifen entnommen werden können. Unter dem dynamischen Reifenumfang und der dynamischen Spurweite sollen hingegen jene Werte verstanden werden, die in einem realen Fahrbetrieb des Fortbewegungsmittels vorliegen. Diese können beispielsweise durch Reifenschlupf, temperaturbedingte und/oder belastungsbedingte Druckschwankungen im Rad oder Druckverlust im Rad oder auch andere Einflussfaktoren von den vordefinierten, technischen Werten abweichen.

Die erfindungsgemäße Vorrichtung kann bevorzugt eine Auswerteeinheit mit einem Dateneingang und einem Datenausgang umfassen. Mittels des Dateneingangs kann die Auswerteeinheit beispielsweise über ein Bordnetz des Fortbewegungsmittels informationstechnisch mit einer Mehrzahl von Sensoren und/oder Steuergeräten des Fortbewegungsmittels verbunden sein, welche die oben genannten Signale erfassen und/oder bereitstellen können. Des Weiteren kann die Auswerteeinheit informationstechnisch mit einer internen und/oder externen Speichereinheit verbunden sein, in welcher durch die Auswerteeinheit empfangene und/oder berechnete Daten abgelegt werden können.

Die Gierrate (oder auch Gierwinkelgeschwindigkeit) stellt die Drehgeschwindigkeit des Fortbewegungsmittels um dessen Hochachse (z-Achse) dar und kann beispielsweise mittels eines Drehratensensors des Fortbewegungsmittels erfasst werden. Die Raddrehzahl des Rades des Fortbewegungsmittels kann mittels eines Raddrehzahlsensors erfasst werden, wobei bevorzugt jedes der Räder des Fortbewegungsmittels über einen solchen Raddrehzahlsensor verfügen kann, so dass jeweilige Raddrehzahlen sämtlicher Räder des Fortbewegungsmittels erfasst und berücksichtigt werden können. Der Lenkwinkel des Fortbewegungsmittels kann zum Beispiel auf Basis eines Lenkwinkelsensors erfasst werden, der bevorzugt in bzw. an einer Lenksäule des Fortbewegungsmittels angeordnet und eingerichtet ist, einen jeweiligen Einschlagwinkel des Lenkrads zu erfassen. Die hier genannten Größen, welche mittels des ersten Signals, des zweiten Signals und des dritten Signals an die Auswerteeinheit übertragen werden, können direkt von den jeweiligen Sensoren zur Erfassung dieser Größen und/oder über Steuergeräte des Fortbewegungsmittels empfangen werden, die mit den jeweiligen Sensoren informationstechnisch verbunden sind.

Die dynamische Spurweite kann in diesem Zusammenhang ein vordefinierter Wert oder ein berechneter Wert sein. Für den Fall, dass sie in Form eines vordefinierten Wertes zur Anwendung kommt, kann dieser vordefinierte Wert bevorzugt in der an die Auswerteeinheit angebunden Speichereinheit abgelegt sein und durch die Auswerteeinheit bei Bedarf ausgelesen werden. Die Speichereinheit kann zu diesem Zweck einen persistenten Speicher umfassen, dessen Inhalt auch nach einer Unterbrechung einer Spanungsversorgung der Speichereinheit erhalten bleibt. Alternativ oder zusätzlich kann die Speichereinheit über einen flüchtigen Speicher verfügen, welcher bevorzugt zur Ablage empfangener und durch die Auswerteeinheit berechneter Daten genutzt werden kann. Der vordefinierte Wert repräsentierend die dynamische Spurweite des Fortbewegungsmittels kann zum Beispiel auf Basis einer Vermessung der Spurweite des Fortbewegungsmittels bestimmt und in der Speichereinheit abgelegt werden. Für den Fall, dass die dynamische Spurweite in Form eines berechneten Wertes zur Anwendung kommt, kann das weiter unten beschriebene, erfindungsgemäße Verfahren zur Berechnung eines jeweiligen aktuellen Wertes für die dynamische Spurweite des Fortbewegungsmittels angewendet werden. Es sei darauf hingewiesen, dass gemäß dem erfindungsgemäßen Verfahren insbesondere eine Kombination aus einer Verwendung eines vordefinierten Wertes für die dynamische Spurweite und einer Verwendung eines berechneten Wertes für die dynamische Spurweite vorgesehen sein kann. Mit anderen Worten kann die Berechnung des dynamischen Reifenumfangs zunächst initial mit einem vordefinierten Wert für die dynamische Spurweite erfolgen. Auf Basis eines nachfolgend berechneten Wertes für den dynamischen Reifenumfang kann entsprechend auch eine Berechnung der dynamischen Spurweite erfolgen, welche ab diesem Zeitpunkt alternativ zum vordefinierten Wert für die dynamische Spurweite verwendet werden kann.

In einem zweiten Schritt des erfindungsgemäßen Verfahrens wird ein erstes Ausgangssignal eines ersten Kalman-Filters repräsentierend den dynamischen Reifenumfang des Rades unter Verwendung des ersten Signals, des zweiten Signals, des dritten Signals und des vierten Signals als Eingangssignale für das erste Kalman-Filter ermittelt. Hierfür kann das erste Kalman-Filter vorteilhaft ein Filter mit einem Zustandsraummodell zur Berechnung des dynamischen Reifenumfangs sein, welches zum Beispiel in Form eines durch die Auswerteeinheit ausgeführten Computerprogramms realisiert wird. Das erste Kalman-Filter kann insbesondere ein Extended-Kalman-Filter, nachfolgend EKF-Filter genannt und bevorzugt ein Unscented-Kalman-Filter, nachfolgend UKF-Filter genannt, sein. Letztere sind insbesondere zur Abbildung von Nichtlinearitäten im jeweils durch das Kalman-Filter abzubildenden Zustandsraummodells geeignet, was insbesondere im Zusammenhang mit der Berechnung des dynamischen Reifenumfangs und der dynamischen Spurweite von Bedeutung ist. Die Berechnung des dynamischen Reifenumfangs bzw. die Berechnung der dynamischen Spurweite erfolgt bevorzugt auf Basis folgender Gleichungen:

$$\dot{\psi}_z = \frac{C}{T} \cdot \frac{\omega_{RR} - \omega_{RL}}{\cos(\delta_R)}$$

und

$$\dot{\psi}_z = \frac{C}{T} \cdot \frac{\omega_{FR} - \omega_{FL}}{\cos(\delta_F)}$$

$\dot{\psi}_z$ bezeichnet die Gierrate des Fortbewegungs-

mittels, $\omega_i$ bezeichnet die Raddrehzahlen der jeweiligen Räder des Fortbewegungsmittels (wobei der Index i für RR: hinten rechts, RL: hinten links, FR: vorne rechts und FL: vorne links steht), $\delta_j$ bezeichnet den Lenkwinkel des Fortbewegungsmittels (wobei der Index j für R: hinten und F: vorne steht), C bezeichnet den dynamischen Reifenumfang und T bezeichnet die dynamische Spurweite. An dieser Stelle sei darauf hingewiesen, dass das erfindungsgemäße Verfahren auch auf Basis einer einzelnen Raddrehzahlinformation eines einzelnen Rades des Fortbewegungsmittels durchgeführt werden kann (zum Beispiel das Rad vorne links) und dass nicht zwangsläufig eine Mehrzahl von Raddrehzahlen einer Mehrzahl von Rädern des Fortbewegungsmittels in die Berechnung einfließen muss. Sofern eine Mehrzahl von Raddrehzahlen in das erste Kalman-Filter eingespeist wird, kann beispielsweise die Raddrehzahl eines Rades des Fortbewegungsmittels als Bezugsgröße festgelegt werden, während die jeweils anderen Raddrehzahlen als virtuelle Größen in das erste Kalman-Filter einfließen, die jeweils auf die Bezugsgröße bezogen sein können.

In einem dritten Schritt des erfindungsgemäßen Verfahrens wird das erste Ausgangsignal, welches den dynamischen Reifenumfang des Fortbewegungsmittels repräsentiert, in einem Steuergerät des Fortbewegungsmittels verwendet. Zu diesem Zweck kann der durch die erfindungsgemäße Auswerteeinheit berechnete Wert des dynamischen Reifenumfangs über den Datenausgang der Auswerteeinheit an das Bordnetz des Fortbewegungsmittels ausgegeben werden. Das Bordnetz bzw. ein hierfür genutztes Teilbordnetz des Fortbewegungsmittels kann beispielsweise in Form eines CAN-, MOST-, FlexRay-, LIN-Busses oder in Form einer Ethernet-Verbindung realisiert werden. Das Steuergerät kann, wie die Auswerteeinheit selbst, ebenfalls informationstechnisch an das Bordnetz bzw. das genutzte Teilbordnetz des Fortbewegungsmittels angebunden sein und somit durch die Auswerteeinheit gesendete Signale repräsentierend den dynamischen Reifenumfang empfangen. Das Steuergerät kann zum Beispiel ein Fahrerassistenzsystem wie ein Parkassistenzsystem sein, welches auf Basis jeweils aktuell berechneter Werte für den dynamischen Reifenumfang eingerichtet sein kann, gewünschte Einparkmanöver mit einer entsprechend hohen Genauigkeit durchzuführen. Darüber hinaus können auch weitere Fahrerassistenzsysteme und/oder Manövriersysteme des Fortbewegungsmittels Empfänger jeweils aktuell berechneter Werte für den dynamischen Reifenumfang sein. Alternativ oder zusätzlich können jeweilige Werte für den dynamischen Reifenumfang auch durch ein System zur vollautomatischen Fahrzeugsteuerung des Fortbewegungsmittels empfangen und in diesem zur Fahrzeugsteuerung angewendet werden.

Die Unteransprüche zeigen bevorzugte Weiterbildungen der Erfindung.

Wie oben bereits beschrieben, kann die dynamische Spurweite auf Basis eines vordefinierten Schätzwertes oder auf Basis eines berechneten Wertes eingesetzt werden. Für den Fall, dass ein berechneter Wert zu Anwendung kommt, kann die dynamische Spurweite bevorzugt mittels eines zweiten Kalman-Filters berechnet werden, dessen Eingangssignale das erste Signal, das zweite Signal, das dritte Signal und das erste Ausgangssignal des ersten Kalman-Filters umfassen. Das zweite Kalman-Filter kann ein Filter mit einem Zustandsraummodell zur Berechnung der dynamischen Spurweite, insbesondere ein UKF-Filter und bevorzugt ein EKF-Filter sein. Sofern das erste Ausgangssignal des ersten Kalman-Filters zu einem Berechnungszeitpunkt der dynamischen Spurweite noch nicht zur Verfügung steht (da dieses ggf. selbst noch nicht berechnet wurde), kann ein vordefinierter Schätzwert für den dynamischen Reifenumfang in das zweite Kalman-Filter anstelle des ersten Ausgangssignals eingespeist werden. Der vordefinierte Schätzwert für den dynamischen Reifenumfang kann ebenfalls in der an die Auswerteeinheit angebundenen Speichereinheit abgelegt sein. Sobald der dynamische Reifenumfang als berechneter Wert in Form des ersten Ausgangssignals des ersten Kalman-Filters vorliegt, kann im Ansprechen darauf dieser berechnete Wert als Eingangssignal für das zweite Kalman-Filter verwendet werden. Für den Fall, dass initial weder ein berechneter Wert für den dynamischen Reifenumfang, noch ein berechneter Wert für die dynamische Spurweite im System vorliegen sollte, können für beide Werte zunächst die jeweiligen vordefinierten Schätzwerte verwendet werden. Eine nachfolgende Berechnung der dynamischen Spurweite und des dynamischen Reifenumfangs auf Basis aktueller Ausgangssignale des jeweils anderen Kalman-Filters kann somit zu einer sukzessiven Annäherung der jeweiligen Werte an die tatsächlichen vorliegenden Werte für eine aktuelle dynamische Spurweite und einen aktuellen dynamischen Reifenumfang des Fortbewegungsmittels führen.

In einer weiteren vorteilhaften Ausgestaltung der vorliegenden Erfindung wird zusätzlich ein fünftes Signal repräsentierend eine Positionsinformation eines satellitenbasierten Ortungssystems des Fortbewegungsmittels als Eingangssignal in das erste Kalman-Filter eingespeist und beim Ermitteln des dynamischen Reifenumfangs verwendet. Das satellitenbasierte Ortungssystem kann beispielsweise ein GPS-, ein Galileo- oder ein weiteres aus dem Stand der Technik bekanntes Ortungssystem sein. Eine entsprechende Empfangseinheit für das satellitenbasierte Ortungssystem kann beispielsweise in einer Navigationseinheit eines Bordcomputers des Fortbewegungsmittels angeordnet sein. Alternativ oder zusätzlich kann eine solche Empfangseinheit auch in einem davon abweichenden Steuergerät des Fortbewegungsmittels vorgesehen sein. Mittels einer informationstechnischen Anbindung des Steuergerätes, welches die Empfangseinheit für das satellitenbasierte Ordnungssystem umfasst, an das Bordnetz des Fortbewegungsmittels, können die im Fortbewegungsmittel empfangenen, aktuellen Positionsinformationen des Fortbewegungsmittels über das Bordnetz an die erfindungsgemäße Auswerteeinheit übertragen werden. Die Auswerteeinheit kann die empfangenen Daten zum Beispiel zunächst in einem flüchtigen Speicher der Speichereinheit ablegen und diese anschließend in Form des fünften Signals in das erste Kalman Filter einspeisen. Durch die zusätzliche Nutzung der jeweils aktuellen Positionsinformationen des Fortbewegungsmittels kann eine Genauigkeit bei der Berechnung des dynamischen Reifenumfangs und somit auch der dynamischen Spurweite erhöht werden. Alternativ oder zusätzlich kann durch die Nutzung der Positionsinformationen eine Dauer für eine Annäherung der jeweils berechneten Werte für den dynamischen Reifenumfang und die dynamische Spurweite an die tatsächlichen Werte ggf. verkürzt werden. Eine Berücksichtigung der Positionsinformation kann bevorzugt auf folgender Gleichung erfolgen:

$$v_{GPS} = C \cdot \frac{\omega_{RR} + \omega_{RL}}{2}$$

In einer weiteren vorteilhaften Ausgestaltung der vorliegenden Erfindung wird das erste Ausgangssignal des ersten Kalman Filters in Abhängigkeit vordefinierter Kriterien aktualisiert oder nicht aktualisiert. Dies kann insbesondere dann von Vorteil sein, wenn eine Qualität aktuell vorliegender Eingangssignale für das erste Kalman-Filter unterhalb einer vordefinierten Schwelle liegt und/oder eines oder mehrere der Eingangssignale situationsbedingt und/oder aufgrund eines technischen Defektes aktuell nicht vorliegen. In einem solchen Fall kann das durch die Auswerteeinheit ausgeführte Computerprogramm einen zuletzt berechneten, gültigen Wert für den dynamischen Reifenumfang unverändert am Ausgang des ersten Kalman-Filters ausgeben (also unabhängig von aktuell anliegenden Eingangssignalen am ersten Kalman-Filter), bis entsprechende vordefinierte Kriterien für die Berechnung der dynamischen Spurweite wieder erfüllt werden. Neben den oben genannten vordefinierten Kriterien kann beispielsweise auch eine aktuelle Fahrtrichtung und/oder eine Geschwindigkeit des Fortbewegungsmittels, ein Aktivierungszustand weiterer Funktionen bzw. Steuergeräte im Fortbewegungsmittel (zum Beispiel eine aktive Fahrdynamikregelung usw.), eine Kategorie einer aktuell befahrenen Strecke (zum Beispiel eine Offroad-Fahrt) usw. zu einem Halten des zuletzt berechneten, gültigen Wertes am Ausgang des ersten Kalman-Filters führen. Darüber hinaus kann auch eine noch nicht abgelaufene, vordefinierte Mindestanlerndauer für das erste Kalman-Filter ein solches vordefiniertes Kriterium darstellen. Die oben genannten Punkte können auf ähnliche Weise auch auf das zweite Kalman-Filter und dessen Eingangsgrößen zutreffen und in diesem in analoger Weise wie im ersten Kalman-Filter zur Anwendung kommen.

In einer weiteren vorteilhaften Ausgestaltung der vorliegenden Erfindung wird ein zweites Ausgangssignal repräsentierend eine Qualität des ersten Ausgangssignals des ersten Kalman-Filters durch das erste Kalman-Filter ausgegeben. Dieses Signal kann allgemein für eine Bewertung eines aktuellen Wertes für den dynamischen Reifenumfang verwendet werden und/oder in Form eines vordefinierten Kriteriums für das oben beschriebene Aktualisieren oder nicht Aktualisieren des ersten Ausgangssignals verwendet werden. Alternativ kann das zweite Ausgangssignal beispielsweise im Falle einer nicht ausreichenden Qualität des ersten Ausgangssignals auch dazu verwendet werden, um anstelle des berechneten Wertes für den dynamischen Reifenumfang den vordefinierten Schätzwert für den dynamischen Reifenumfang am Ausgang des ersten Kalman-Filters auszugeben. Auch hier gilt, dass die für das erste Kalman-Filter beschriebenen Maßnahmen in analoger Weise für das zweite Kalman-Filter angewendet werden können.

In einer weiteren vorteilhaften Ausgestaltung der vorliegenden Erfindung wird das Ermitteln des dynamischen Reifenumfangs und/oder der dynamischen Spurweite bei einer Längsgeschwindigkeit des Fortbewegungsmittels von 1 km/h bis 200 km/h, insbesondere von 3 km/h bis 150 km/h und bevorzugt von 5 km/h bis 130 km/h durchgeführt. Durch Einhaltung eines oder mehrerer der vorgeschlagenen Wertebereiche für die Längsgeschwindigkeit des Fortbewegungsmittels kann sichergestellt werden, dass eine Qualität bzw. Zuverlässigkeit der ermittelten Werte für den dynamischen Reifenumfang und die dynamische Spurweite für eine nachgelagerte Verarbeitung der jeweiligen Werte ausreichend ist.

Es sei darauf hingewiesen, dass oben genannte Verfahrensschritte und deren vorteilhafte Ausgestaltungen innerhalb des Schutzumfangs der Erfindung auf unterschiedliche Weise kombiniert, modifiziert und ausgelassen werden können. In einer konkreten Implementierung des erfindungsgemäßen Verfahrens können mittels des erfindungsgemäßen Computerprogramms beispielsweise unterschiedliche Modi zur Berechnung des dynamischen Reifenumfangs und/oder der dynamischen Spurweite vorgesehen werden, welche in Abhängigkeit der vordefinierten Kriterien und/oder einer Qualität der Ausgangssignale des ersten und/oder zweiten Kalman-Filters und/oder in einem jeweiligen Fortbewegungsmittel verfügbarer Signale in geeigneter Weise ausgewählt werden können.

Gemäß einem zweiten Aspekt der vorliegenden Erfindung wird eine Vorrichtung zum Ermitteln eines dynamischen Reifenumfangs eines Fortbewegungsmittels vorgeschlagen. Die Vorrichtung umfasst eine Auswerteeinheit mit einem Dateneingang und einem Datenausgang und kann Bestandteil eines bestehenden Steuergerätes oder ein eigenständiges Steuergerät des Fortbewegungsmittels sein. Des Weiteren kann die Auswerteeinheit beispielsweise als ASIC, FPGA, Prozessor, digitaler Signalprozessor, Mikrocontroller, o.ä., ausgestaltet und informationstechnisch an eine interne und/oder externe Speichereinheit angebunden sein, in welcher durch die Auswerteeinheit empfangene und/oder berechnete Daten für eine nachfolgende Verarbeitung abgelegt werden können. Ferner kann die Auswerteeinheit eingerichtet sein, oben beschriebene erfindungsgemäße Verfahrensschritte auf Basis eines die Verfahrensschritte implementierenden Computerprogramms auszuführen. Die Auswerteeinheit ist weiter eingerichtet, in Verbindung mit dem Dateneingang ein erstes Signal repräsentierend eine Gierrate des Fortbewegungsmittels, ein zweites Signal repräsentierend eine Raddrehzahl eines Rades des Fortbewegungsmittels, ein drittes Signal repräsentierend einen Lenkwinkel des Fortbewegungsmittels und ein viertes Signal repräsentierend eine dynamische Spurweite des Fortbewegungsmittels zu empfangen. Dies kann bevorzugt durch eine informationstechnische Anbindung des Dateneingangs der Auswerteeinheit an ein Bordnetz des Fortbewegungsmittels erfolgen, über welches die Auswerteeinheit oben genannte Signale von weiteren Steuergeräten des Fortbewegungsmittels empfangen kann. Die Auswerteeinheit ist darüber hinaus eingerichtet, ein erstes Ausgangssignal eines ersten Kalman-Filters repräsentierend den dynamischen Reifenumfang des Rades unter Verwendung des ersten Signals, des zweiten Signals, des dritten Signals und des vierten Signals als Eingangssignale für das erste Kalman-Filter zu ermitteln. In Verbindung mit dem Datenausgang ist die Auswerteeinheit zusätzlich eingerichtet, das erste Ausgangssignal in einem Steuergerät des Fortbewegungsmittels zu verwenden. Zu diesem Zweck kann der Datenausgang der Auswerteeinheit ebenfalls informationstechnisch mit dem Bordnetz des Fortbewegungsmittels verbunden sein, so dass die Auswerteeinheit in die Lage versetzt wird, mittels des ersten Kalman-Filters berechnete erste Ausgangssignale über das Bordnetz an ein oder mehrere geeignete Empfänger des ersten Ausgangssignals im Fortbewegungsmittel zu übertragen.

Kurze Beschreibung der Zeichnungen

Nachfolgend werden Ausführungsbeispiele der Erfindung unter Bezugnahme auf die begleitende Zeichnung im Detail beschrieben. Dabei zeigen:

Figur 1    ein Flussdiagramm veranschaulichend Schritte eines Ausführungsbeispiels eines erfindungsgemäßen Verfahrens;

Figur 2    ein Blockschaltbild eines ersten erfindungsgemäßen Kalman-Filters zur Berechnung eines dynamischen Reifenumfangs eines Fortbewegungsmittels;

Figur 3    ein Blockschaltbild eines zweiten erfindungsgemäßen Kalman-Filters zur Berechnung einer dynamischen Spurweite eines Fortbewegungsmittels; und

Figur 4    eine schematische Übersicht über Komponenten einer erfindungsgemäßen Vorrichtung in Verbindung mit einem Fortbewegungsmittel.

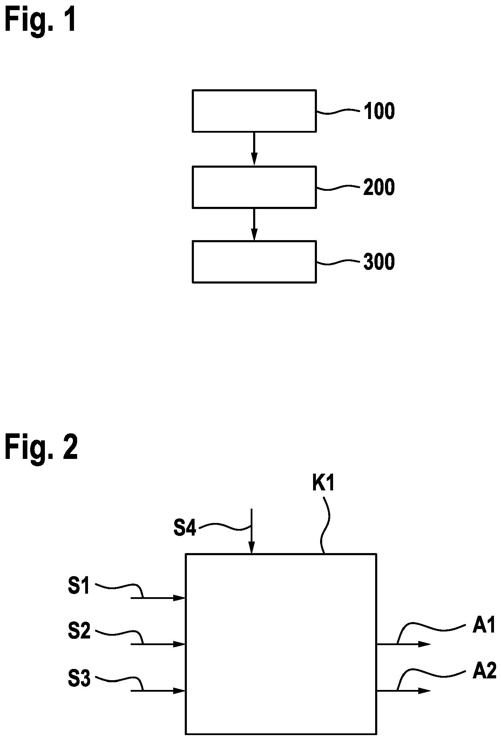

Figur 1 zeigt ein Flussdiagramm veranschaulichend Schritte eines Ausführungsbeispiels eines erfindungsgemäßen Verfahrens zum Ermitteln eines dynamischen Reifenumfangs eines Fortbewegungsmittels, welches hier ein PKW ist. Im ersten Schritt 100 empfängt eine erfindungsgemäße Auswerteeinheit, welche mit einem Bordnetz des Fortbewegungsmittels informationstechnisch gekoppelt ist, ein erstes Signal repräsentierend eine Gierrate des Fortbewegungsmittels, ein zweites Signal repräsentierend eine Raddrehzahl eines Rades des Fortbewegungsmittels, ein drittes Signal repräsentierend einen Lenkwinkel des Fortbewegungsmittels und ein viertes Signal repräsentierend eine dynamische Spurweite des Fortbewegungsmittels und speichert durch die Signale repräsentierte Daten in einer an die Auswerteinheit informationstechnisch angebundenen Speichereinheit ab. Im Schritt 200 wird durch die Auswerteeinheit ein erstes Ausgangssignal eines ersten Kalman-Filters repräsentierend den dynamischen Reifenumfang des Rades unter Verwendung des ersten Signals, des zweiten Signals, des dritten Signals und des vierten Signals als Eingangssignale für das erste Kalman-Filter ermittelt. Das erste Kalman-Filter ist hier ein UKF-Filter. Das Ermitteln des ersten Ausgangssignals erfolgt auf Basis eines Computerprogramms, welches durch die Auswerteeinheit ausgeführt wird und welches ein Zustandsraummodell zur Berechnung des dynamischen Reifenumfangs abbildet. Im dritten Schritt 300 wird das erste Ausgangssignal des UKF-Filters über das Bordnetz des Fortbewegungsmittels an ein Parkassistenzsystem des Fortbewegungsmittels übertragen, welches auf Basis des ersten Ausgangssignals ein vollautomatisches Einparkmanöver durchführt.

Figur 2 zeigt ein Blockschaltbild eines ersten erfindungsgemäßen Kalman-Filters K1 zur Berechnung eines dynamischen Reifenumfangs eines Fortbewegungsmittels. Zu diesem Zweck werden in den Eingang des ersten Kalman-Filters K1 ein erstes Signal S1 repräsentierend eine Gierrate des Fortbewegungsmittels, ein zweites Signal S2 repräsentierend eine Raddrehzahl eines Rades des Fortbewegungsmittels, ein drittes Signal S3 repräsentierend einen Lenkwinkel des Fortbewegungsmittels und ein viertes Signal S4 repräsentierend eine dynamische Spurweite des Fortbewegungsmittels eingespeist. Das vierte Signal S4 repräsentierend die dynamische Spurweite des Fortbewegungsmittels entspricht hier einem tatsächlich berechneten und keinem geschätzten Wert für die dynamische Spurweite. Auf Basis der Eingangssignale S1, S2, S3, S4 und auf Basis eines geeigneten Zustandsraummodells ist das erste Kalman-Filter K1 eingerichtet, ein erstes Ausgangssignal A1 zu berechnen, welches den dynamischen Reifenumfang des Fortbewegungsmittels repräsentiert. Darüber hinaus wird durch das erste Kalman-Filter K1 ein zweites Ausgangssignal A2 erzeugt, welches ein Maß für eine Qualität des ersten Ausgangssignals A1 darstellt.

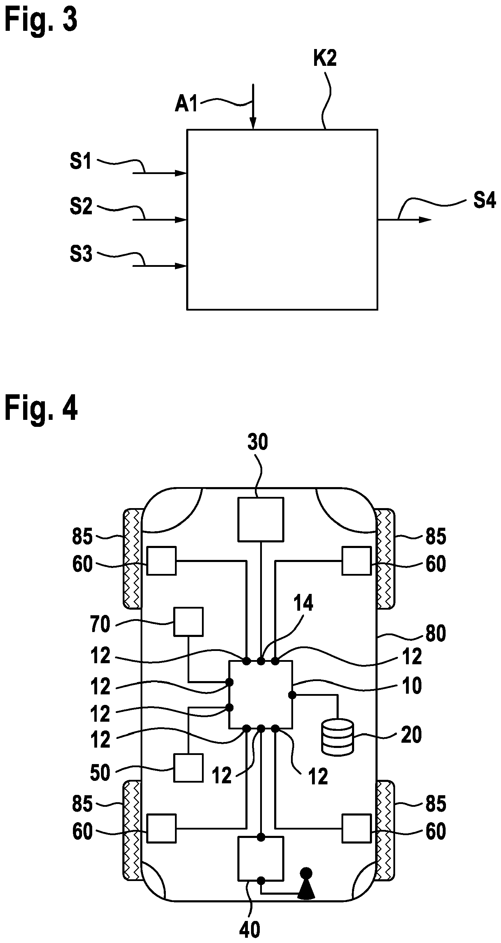

Figur 3 zeigt ein Blockschaltbild eines zweiten erfindungsgemäßen Kalman-Filters K2 zur Berechnung einer dynamischen Spurweite eines Fortbewegungsmittels. Zu diesem Zweck werden in den Eingang des zweiten Kalman-Filters K2 ein erstes Signal S1 repräsentierend eine Gierrate des Fortbewegungsmittels, ein zweites Signal S2 repräsentierend eine Raddrehzahl eines Rades des Fortbewegungsmittels, ein drittes Signal S3 repräsentierend einen Lenkwinkel des Fortbewegungsmittels und ein erstes Ausgangssignal A1 des ersten Kalman-Filters K1 repräsentierend einen dynamischen Reifenumfang des Fortbewegungsmittels eingespeist. Das erste Ausgangssignal A1 repräsentierend den dynamischen Reifenumfang des Fortbewegungsmittels entspricht hier einem tatsächlich berechneten und keinem geschätzten Wert für den dynamischen Reifenumfang. Auf Basis der Eingangssignale S1, S2, S3, A1 und auf Basis eines geeigneten Zustandsraummodells ist das zweite Kalman-Filter K2 eingerichtet, ein viertes Signal S4 zu berechnen, welches die dynamische Spurweite des Fortbewegungsmittels repräsentiert.

Figur 4 zeigt eine schematische Übersicht über Komponenten einer erfindungsgemäßen Vorrichtung in Verbindung mit einem Fortbewegungsmittel 80. Die erfindungsgemäße Vorrichtung umfasst eine Auswerteeinheit 10, welche hier ein Mikrocontroller ist und welche über einen Dateneingang 12 und einen Datenausgang 14 verfügt. Des Weiteren ist eine externe Speichereinheit 20 informationstechnisch an die Auswerteeinheit 10 angebunden, in welcher die Auswerteeinheit 10 empfangene und/oder berechnete Daten ablegen kann. Die Auswerteeinheit 10 ist eingerichtet, oben beschriebene, erfindungsgemäße Verfahrensschritte auf Basis eines Computerprogramms auszuführen. Über einen CAN-Bus eines Bordnetzes des Fortbewegungsmittels 80 ist ein Drehratensensor 50 des Fortbewegungsmittels 80 informationstechnisch mit dem Dateneingang 12 der Auswerteeinheit 10 verbunden. Ferner ist eine Mehrzahl von Raddrehzahlsensoren 60 jeweiliger Räder 85 des Fortbewegungsmittels 80 ebenfalls über den CAN-Bus mit dem Dateneingang 12 der Auswerteeinheit 10 verbunden. Darüber hinaus sind ein Lenkwinkelsensor 70 und ein GPS-Empfänger 40 des Fortbewegungsmittels 80 ebenfalls über den CAN-Bus mit dem Dateneingang 12 der Auswerteeinheit 10 verbunden. Auf diese Weise ist die Auswerteeinheit 10 eingerichtet, ein erstes Signal repräsentierend eine Gierrate vom Drehratensensor 50, zweite Signale repräsentierend Raddrehzahlen von einer Mehrzahl von Raddrehzahlsensoren 60, ein drittes Signal repräsentierend einen Lenkwinkel vom Lenkwinkelsensor 70 und ein fünftes Signal repräsentierend eine Positionsinformation vom GPS-Empfänger 40 des Fortbewegungsmittels 80 zu empfangen. Zusätzlich empfängt die Auswerteeinheit 10 von der Speichereinheit 20 einen vordefinierten Schätzwert für eine dynamische Spurweite des Fortbewegungsmittels 80. Sämtliche oben beschriebenen Empfangssignale und der vordefinierte Schätzwert für die dynamische Spurweite des Fortbewegungsmittels 80 werden in der Auswerteeinheit 10 einem ersten Kalman-Filter als Eingangssignale zugeführt, um auf Basis dieser Eingangssignale einen dynamischen Reifenumfang des Fortbewegungsmittels 80 zu berechnen. Das erste Kalman-Filter ist mittels des durch die Auswerteeinheit 10 ausgeführten Computerprogramms realisiert. Ein Ergebnis der Berechnung des dynamischen Reifenumfangs wird mittels des Datenausgangs 14 der Auswerteeinheit 10 über den CAN-Bus an ein Parkassistenzsystem 30 des Fortbewegungsmittels 80 übertragen. Das Parkassistenzsystem 30 verwendet die Information über den dynamischen Reifenumfang anschließend bei der Durchführung eines vollautomatischen Einparkvorgangs des Fortbewegungsmittels 80.

**Patentansprüche**

1. Verfahren zum Ermitteln eines dynamischen Reifenumfangs eines Fortbewegungsmittels (80) umfassend die Schritte:

   • Empfangen (100) eines ersten Signals (S1) repräsentierend eine Gierrate des Fortbewegungsmittels (80), eines zweiten Signals (S2) repräsentierend eine Raddrehzahl eines Rades (85) des Fortbewegungsmittels (80), eines dritten Signals (S3) repräsentierend einen Lenkwinkel des Fortbewegungsmittels (80) und eines vierten Signals (S4) repräsentierend eine dynamische Spurweite des Fortbewegungsmittels (80),
   • Ermitteln (200) eines ersten Ausgangssignals (A1) eines ersten Kalman-Filters (K1) repräsentierend den dynamischen Reifenumfang des Rades (85) unter Verwendung des ersten Signals (S1), des zweiten Signals (S2), des dritten Signals (S3) und des vierten Signals (S4) als Eingangssignale für das erste Kalman-Filter (K1), und
   • Verwenden (300) des ersten Ausgangssignals (A1) in einem Steuergerät (30) des Fortbewegungsmittels (80).

2. Verfahren nach Anspruch 1, wobei das erste Kalman-Filter (K1) ein Filter mit einem Zustandsraummodell zur Berechnung des dynamischen Reifenumfangs, insbesondere ein Extended-Kalman-Filter, nachfolgend EKF-Filter genannt und bevorzugt ein Unscented-Kalman-Filter, nachfolgend UKF-Filter genannt, ist.

3. Verfahren nach einem der vorstehenden Ansprüche, wobei die dynamische Spurweite ein vordefinierter Schätzwert für die dynamische Spurweite ist, oder mittels eines zweiten Kalman-Filters (K2) berechnet wird, dessen Eingangssignale das erste Signal (S1), das zweite Signal (S2), das dritte Signal (S3) und das erste Ausgangssignal (A1) des ersten Kalman-Filters (K1) umfassen.

4. Verfahren nach Anspruch 3, wobei das zweite Kalman-Filter (K2) ein Filter mit einem Zustandsraummodell zur Berechnung der dynamischen Spurweite, insbesondere ein UKF-Filter und bevorzugt ein EKF-Filter ist.

5. Verfahren nach einem der vorstehenden Ansprüche, wobei zusätzlich ein fünftes Signal (S5) repräsentierend eine Positionsinformation eines satellitenbasierten Ortungssystems (40) des Fortbewegungsmittels (80) als Eingangssignal in das erste Kalman-Filter (K1) eingespeist und beim Ermitteln des dynamischen Reifenumfangs verwendet wird.

6. Verfahren nach einem der vorstehenden Ansprüche, wobei das erste Ausgangssignal (A1) des ersten Kalman-Filters (K1) in Abhängigkeit vordefinierter Kriterien aktualisiert oder nicht aktualisiert wird.

7. Verfahren nach einem der vorstehenden Ansprüche, wobei ein zweites Ausgangssignal (A2) repräsentierend eine Qualität des ersten Ausgangssignals (A1) des ersten Kalman-Filters (K1) durch das erste Kalman-Filter (K1) ausgeben wird.

8. Verfahren nach einem der vorstehenden Ansprüche, wobei das Ermitteln (200) des dynamischen Reifenumfangs und/oder der dynamischen Spurweite bei einer Längsgeschwindigkeit des Fortbewegungsmittels (80) von 1 km/h bis 200 km/h, insbesondere von 3 km/h bis 150 km/h und bevorzugt von 5 km/h bis 130 km/h durchgeführt wird.

9. Verfahren nach einem der vorstehenden Ansprüche, wobei das erste Ausgangssignal (A1) des ersten Kalman-Filters (K1) in einem Fahrerassistenzsystem (30) des Fortbewegungsmittels (80), insbesondere in einem Manövriersystem und bevorzugt in einem Parkassistenzsystem des Fortbewegungsmittels (80) verwendet wird.

10. Verfahren nach einem der vorstehenden Ansprüche, wobei in das erste Kalman-Filter (K1) eine Mehrzahl zweiter Signale (S2) repräsentierend eine Mehrzahl von Raddrehzahlen einer Mehrzahl von Rädern (85) des Fortbewegungsmittels (80) einfließt.

11. Vorrichtung zum Ermitteln eines dynamischen Reifenumfangs eines Fortbewegungsmittels (80) umfassend:

- eine Auswerteeinheit (10),
- einen Dateneingang (12), und
- einen Datenausgang (14),

wobei die Auswerteeinheit (10) eingerichtet ist,

- in Verbindung mit dem Dateneingang (12) ein erstes Signal (S1) repräsentierend eine Gierrate des Fortbewegungsmittels (80), ein zweites Signal (S2) repräsentierend eine Raddrehzahl eines Rades (85) des Fortbewegungsmittels (80), ein drittes Signal (S3) repräsentierend einen Lenkwinkel des Fortbewegungsmittels (80) und ein viertes Signal (S4) repräsentierend eine dynamische Spurweite des Fortbewegungsmittels (80) zu empfangen,
- ein erstes Ausgangssignal (A1) eines ersten Kalman-Filters (K1) repräsentierend den dynamischen Reifenumfang des Rades (85) unter Verwendung des ersten Signals (S1), des zweiten Signals (S2), des dritten Signals (S3) und des vierten Signals (S4) als Eingangssignale für das erste Kalman-Filter (K1) zu ermitteln, und
- in Verbindung mit dem Datenausgang (14) das erste Ausgangssignal (A1) in einem Steuergerät (30) des Fortbewegungsmittels (80) zu verwenden.

**Claims**

1. Method for ascertaining a dynamic tyre circumference of a means of transport (80), comprising the following steps:

- receiving (100) a first signal (S1) representing a yaw rate of the means of transport (80), a second signal (S2) representing a wheel speed of a wheel (85) of the means of transport (80), a third signal (S3) representing a steering angle of the means of transport (80) and a fourth signal (S4) representing a dynamic gauge of the means of transport (80),
- ascertaining (200) a first output signal (A1) from a first Kalman filter (K1) representing the dynamic tyre circumference of the wheel (85) using the first signal (S1), the second signal (S2), the third signal (S3) and the fourth signal (S4) as input signals for the first Kalman filter (K1), and
- using (300) the first output signal (A1) in a controller (30) of the means of transport (80).

2. Method according to Claim 1, wherein the first Kalman filter (K1) is a filter having a state space model for computing the dynamic tyre circumference, in particular an extended Kalman filter, hereinafter referred to as EKF filter, and preferably an unscented Kalman filter, hereinafter referred to as UKF filter.

3. Method according to either of the preceding claims, wherein the dynamic gauge is a predefined estimated value for the dynamic gauge, or is computed by way of a second Kalman filter (K2), the input signals of which comprise the first signal (S1), the second signal (S2), the third signal (S3) and the first output signal (A1) from the first Kalman filter (K1).

4. Method according to Claim 3, wherein the second Kalman filter (K2) is a filter having a state space model for computing the dynamic gauge, in particular a UKF filter and preferably an EKF filter.

5. Method according to one of the preceding claims, wherein a fifth signal (S5) representing position information in relation to a satellite-based locating system (40) of the means of transport (80) is additionally fed into the first Kalman filter (K1) as input signal and used when ascertaining the dynamic tyre circumference.

6. Method according to one of the preceding claims, wherein the first output signal (A1) from the first Kalman filter (K1) is updated or not updated on the basis of predefined criteria.

7. Method according to one of the preceding claims, wherein a second output signal (A2) representing a quality of the first output signal (A1) from the first Kalman filter (K1) is output by the first Kalman filter (K1) .

8. Method according to one of the preceding claims, wherein the dynamic tyre circumference and/or the dynamic gauge are/is ascertained (200) at a longitudinal speed of the means of transport (80) of 1 km/h to 200 km/h, in particular of 3 km/h to 150 km/h and preferably of 5 km/h to 130 km/h.

9. Method according to one of the preceding claims, wherein the first output signal (A1) from the first Kalman filter (K1) is used in a driver assistance system (30) of the means of transport (80), in particular in a manoeuvring system and preferably in a parking assistance system of the means of transport (80).

10. Method according to one of the preceding claims, wherein a plurality of second signals (S2) representing a plurality of wheel speeds of a plurality of wheels (85) of the means of transport (80) are incorporated into the first Kalman filter (K1).

11. Device for ascertaining a dynamic tyre circumference of a means of transport (80), comprising:

   • an evaluation unit (10),
   • a data input (12), and
   • a data output (14),
   wherein the evaluation unit (10) is configured,

   • in conjunction with the data input (12), to receive a first signal (S1) representing a yaw rate of the means of transport (80), a second signal (S2) representing a wheel speed of a wheel (85) of the means of transport (80), a third signal (S3) representing a steering angle of the means of transport (80) and a fourth signal (S4) representing a dynamic gauge of the means of transport (80),
   • to ascertain a first output signal (A1) from a first Kalman filter (K1) representing the dynamic tyre circumference of the wheel (85) using the first signal (S1), the second signal (S2), the third signal (S3) and the fourth signal (S4) as input signals for the first Kalman filter (K1), and
   • in conjunction with the data output (14), to use the first output signal (A1) in a controller (30) of the means of transport (80).

## Revendications

1. Procédé de détermination d'une circonférence de pneu dynamique d'un moyen de déplacement (80) comprenant les étapes :

   • réception (100) d'un premier signal (S1) représentant un taux de lacet du moyen de déplacement (80), d'un deuxième signal (S2) représentant une vitesse de rotation de roue d'une roue (85) du moyen de déplacement (80), d'un troisième signal (S3) représentant un angle de braquage du moyen de déplacement (80) et d'un quatrième signal (S4) représentant un écartement des roues dynamique du moyen de déplacement (80),
   • détermination (200) d'un premier signal de sortie (A1) d'un premier filtre de Kalman (K1) représentant la circonférence de pneu dynamique de la roue (85) en utilisant le premier signal (S1), le deuxième signal (S2), le troisième signal (S3) et le quatrième signal (S4) comme signaux d'entrée pour le premier filtre de Kalman (K1), et
   • utilisation (300) du premier signal de sortie (A1) dans un contrôleur (30) du moyen de déplacement (80).

2. Procédé selon la revendication 1, le premier filtre de Kalman (K1) étant un filtre avec un modèle d'espace d'état destiné à calculer la circonférence de pneu dynamique, notamment un filtre de Kalman étendu, ci-après appelé filtre EKF, et de préférence un filtre de Kalman sans parfum, ci-après appelé filtre UKF.

3. Procédé selon l'une des revendications précédentes, l'écartement des roues dynamique étant une valeur estimée prédéfinie pour l'écartement des roues dynamique, ou étant calculé au moyen d'un deuxième filtre de Kalman (K2) dont les signaux d'entrée comprennent le premier signal (S1), le deuxième signal (S2), le troisième signal (S3) et le premier signal de sortie (A1) du premier filtre de Kalman (K1).

4. Procédé selon la revendication 3, le deuxième filtre de Kalman (K2) étant un filtre avec un modèle d'espace d'état destiné au calcul de l'écartement des roues dynamique, notamment un filtre UKF et de préférence un filtre EKF.

5. Procédé selon l'une des revendications précédentes, un cinquième signal (S5) représentant une information de position d'un système de localisation par satellite (40) du moyen de déplacement (80) étant en plus injecté en tant que signal d'entrée dans le premier filtre de Kalman (K1) et étant utilisé lors de la détermination de la circonférence de pneu dynamique.

6. Procédé selon l'une des revendications précédentes, le premier signal de sortie (A1) du premier filtre de Kalman (K1) étant mis à jour, ou non, en fonction de critères prédéfinis.

7. Procédé selon l'une des revendications précédentes, un deuxième signal de sortie (A2) qui représente une qualité du premier signal de sortie (A1) du premier filtre de Kalman (K1) étant délivré par le premier filtre de Kalman (K1).

8. Procédé selon l'une des revendications précédentes, la détermination (200) de la circonférence de pneu dynamique et/ou de l'écartement des roues dynamique étant effectuée à une vitesse longitudinale du moyen de déplacement (80) de 1 km/h à 200 km/h, notamment de 3 km/h à 150 km/h et de préférence de 5 km/h à 130 km/h.

9. Procédé selon l'une des revendications précédentes, le premier signal de sortie (A1) du premier filtre de Kalman (K1) étant utilisé dans un système d'assistance à la conduite (30) du moyen de déplacement (80), notamment dans un système de manoeuvre et de préférence dans un système d'assistance au stationnement du moyen de déplacement (80).

10. Procédé selon l'une des revendications précédentes, une pluralité de deuxièmes signaux (S2) qui représentent une pluralité de vitesses de rotation de roues d'une pluralité de roues (85) du moyen de déplacement (80) étant intégrés dans le premier filtre de Kalman (K1).

11. Dispositif de détermination d'une circonférence de pneu dynamique d'un moyen de déplacement (80) comprenant :

• une unité d'évaluation (10),
• une entrée de données (12), et
• une sortie de données (14),
l'unité d'évaluation (10) étant conçue pour,
• en liaison avec l'entrée de données (12), recevoir un premier signal (S1) représentant un taux de lacet du moyen de déplacement (80), un deuxième signal (S2) représentant une vitesse de rotation de roue d'une roue (85) du moyen de déplacement (80), un troisième signal (S3) représentant un angle de braquage du moyen de déplacement (80) et un quatrième signal (S4) représentant un écartement des roues dynamique du moyen de déplacement (80),
• déterminer un premier signal de sortie (A1) d'un premier filtre de Kalman (K1) représentant la circonférence de pneu dynamique de la roue (85) en utilisant le premier signal (S1), le deuxième signal (S2), le troisième signal (S3) et le quatrième signal (S4) comme signaux d'entrée pour le premier filtre de Kalman (K1), et
• en liaison avec la sortie de données (14), utiliser le premier signal de sortie (A1) dans un contrôleur (30) du moyen de déplacement (80).

# Fig. 1

```
┌─────────────┐
│             │───── 100
└─────────────┘
       │
       ▼
┌─────────────┐
│             │───── 200
└─────────────┘
       │
       ▼
┌─────────────┐
│             │───── 300
└─────────────┘
```

# Fig. 2

```
                          K1
              S4
         ┌─────────────────┐
    S1 ──▶│                 │
         │                 │──▶ A1
    S2 ──▶│                 │
         │                 │──▶ A2
    S3 ──▶│                 │
         └─────────────────┘
```

# Fig. 3

# Fig. 4

EP 3 898 367 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016103637 A1
- DE 102013021826 A1
- DE 102012208298 A1
- DE 102010000867 A1
- DE 102012000213 A1
- DE 102006058567 A1
- DE 102010007650 A1
- DE 102012216215 A1
- WO 03022651 A1